# EUROPÄISCHE PATENTSCHRIFT

(11) **EP 2 377 686 B1**
(45) Veröffentlichungstag und Bekanntmachung des Hinweises auf die Patenterteilung: **08.06.2016**
(21) Anmeldenummer: 11002959.2
(22) Anmeldetag: 08.04.2011
(51) Int. Cl.: B41F 13/08

(54) **Hülse zur Montage auf einen Druckmaschinenzylinder**
Sleeve for mounting on a printing press cylinder
Manchon à monter sur un cylindre de machine d'impression

(30) Priorität: 16.04.2010 DE 102010015108
(43) Veröffentlichungstag der Anmeldung: 19.10.2011
(73) Patentinhaber: Euro-Composites S.A., 6401 Echternach (LU)
(72) Erfinder: Berg, Felix, Dr.-Ing., 64404 Bickenbach (DE); Belau, Lutz, 64347 Griesheim (DE); Schröder, Bernd, 64287 Darmstadt (DE); Georg, Heinz, 64850 Radheim (DE)
(74) Vertreter: Lippert, Stachow & Partner

(56) Entgegenhaltungen:
- EP-A1- 0 403 685
- EP-A1- 0 683 040
- EP-A1- 2 275 372
- DE-A1- 10 018 418
- DE-A1- 10 054 361
- DE-A1- 19 533 823
- DE-C3- 2 115 156
- US-A- 2 241 671
- US-A1- 2002 046 668
- US-A1- 2006 096 098

## Beschreibung

Die Erfindung betrifft allgemein einen Rotationszylinder für eine Verarbeitungsmaschine nach dem Oberbegriff des unabhängigen Anspruches, und insbesondere eine Hülse zur Montage auf einem Druckmaschinenzylinder.

DE 35 43 704 A1 offenbart eine Offsetdruckmaschine deren Druckmaschinenzylinder, insbesondere der Formzylinder bzw. Plattenzylinder und der Übertragungszylinder bzw. Gummituchzylinder auswechselbare Hülsen tragen. Derartige Hülsen werden bekanntlich seitlich, d. h. in axialer Richtung des jeweiligen Druckmaschinenzylinders auf dessen Zylinderkörper aufgeschoben bzw. von diesem abgezogen. Hierzu wird die jeweilige Hülse an der inneren Oberfläche mit einem Druckmedium beaufschlagt und dadurch temporär gedehnt, so dass die Hülse auf den Zylinderkörper in axialer Richtung aufschiebbar ist. Anschließend wird die Hülse an deren innerer Oberfläche vom Druckmedium entlastet und kraftschlüssig auf dem Zylinderkörper fixiert. Auf der Hülse des Formzylinders bzw. Plattenzylinders kann wenigstens eine Metallschicht angeordnet sein, welche das Drucksujet bildet. Auf der Hülse des Übertragungszylinders bzw. Gummituchzylinders kann eine Gummibeschichtung angeordnet sein.

Eine weitere derartige Hülse ist aus DE 10 2004 048 634 A1 bekannt, welche bevorzugt als Distanzhülse für formatvariable Druckmaschinen einsetzbar ist. Die Hülse umfasst mindestens zwei metallische Schichten, wobei zwischen diesen, ersten und zweiten Schichten mindestens eine formstabile Zwischenschicht angeordnet ist. Bevorzugt ist die Zwischenschicht mittels je einer Klebschicht fest mit der ersten und der zweiten Schicht verbunden. Die Zwischenschicht ist bevorzugt aus einem metallischen oder einem nicht-metallischen Werkstoff, insbesondere einem geschäumten Werkstoff, wie PU-Schaum oder Metallschaum, gebildet. In einer Ausbildung kann die Distanzhülse, speziell deren als äußere Deckschicht ausgebildete zweite Schicht, Träger für eine eine Funktionsfläche bildende Einrichtung, sein. Eine derartige Einrichtung kann eine Druckform, Druckplatte bzw. Druckhülse oder ein Gummituch oder eine Gummihülse mit oder ohne kompressibler Schicht und Gewebeschicht sein. Die Einrichtung kann ebenfalls als Sleeve (Hülse) auf der Distanzhülse ausgebildet sein.

Der Erfindung liegt die Aufgabe zu Grunde, einen Rotationszylinder bzw. eine Hülse der eingangs genannten Art zu verbessern, derart, dass diese ohne Beeinträchtigung der Stabilität leichter ist.

Die Aufgabe wird durch die kennzeichnenden Ausbildungsmerkmale von Anspruch 1 gelöst. Weiterbildungen ergeben sich aus den abhängigen Ansprüchen.

Ein erster Vorteil ist darin begründet, dass der Rotationszylinder als Hohlzylinder mit einem mehrschichtigen Aufbau ausgebildet ist und für einen Zylinder einer Verarbeitungsmaschine ohne Beeinträchtigung der Stabilität eine spürbar reduzierte Masse aufweist. Der Rotationszylinder zeichnet sich weiterhin durch hinreichende Steifigkeit, einschließlich Torsionssteifigkeit, bzw. Festigkeit oder durch eine reduzierte Durchbiegung oder ein verringertes Massenträgheitsmoment aus.

Als zweiter Vorteil kann genannt werden, dass der Aufbau des Rotationszylinders - ausgehend von einer ersten und einer zweiten konzentrisch zur Achse des Rotationszylinders jeweils angeordneten Schicht - wenigstens eine zwischen der ersten und zweiten Schicht formstabil angeordnete Zwischenschicht aufweist und zumindest diese wenigstens eine Zwischenschicht nach dem Prinzip des konstruktiven Leichtbaus ausgebildet ist.

In einer vorteilhaften Ausbildung kann konzentrisch auf der ersten Zwischenschicht zumindest eine zweite Zwischenschicht fixiert angeordnet sein, welche ebenfalls nach dem gleichen Prinzip ausgebildet ist.

Dieser konzentrische Aufbau der Zwischenschichten ist nicht auf eine oder zwei derartige Zwischenschichten beschränkt. Vielmehr können weitere derartige konzentrisch angeordnete Zwischenschichten in den Aufbau des Rotationszylinders, d. h. zwischen der ersten und der zweiten Schicht integriert angeordnet sein. In vorteilhafter Weise wird zumindest mit den radial angeordneten Stegen der ersten bzw. der ersten und zweiten (oder gegebenenfalls weiteren) Zwischenschicht(en) eine Tragwerkskonstruktion für einen Rotationszylinder geschaffen, die zumindest in radialer Richtung die anfallenden Kräfte stabil aufnimmt, die Kräfte in Richtung der ersten Schicht ableitet und gleichzeitig leicht ist. Nach einem weiteren Aspekt wird die Stabilität weiter verbessert, indem durch weitere, eine Art Schalen bildende, konzentrische Schichten, wie der zweiten Schicht und/oder einer Schichtlage oder mehreren Schichtlagen zwischen den Zwischenschichten bzw. zwischen einer Zwischenschicht und der zweiten Schicht, die Flächenstatik des Rotationszylinders erhöht wird.

Ein weiterer Aspekt ist die Art der Verbindung der Stege der Zwischenschichten, insbesondere in deren Randbereichen. Mittels kraftschlüssiger bzw. kraftschlüssiger und/oder formschlüssiger Verbindung wird hierzu ein weiterer Beitrag zur Erhöhung der Stabilität des Rotationszylinders bei gleichzeitiger Beibehaltung des Leichtbauprinzips erzielt. Dabei sind die zur ersten Schicht unmittelbar benachbarten Stege einer ersten Zwischenschicht endseitig in ihrem jeweiligen Randbereich stets kraftschlüssig mit der Oberfläche der ersten Schicht verbunden. Die jeweiligen von der ersten Schicht abgewandten Randbereiche der Stege sind kraftschlüssig und/oder formschlüssig mit einer der Schichtlagen oder der Innenseite der zweiten Schicht verbunden.

Ein dritter Vorteil ergibt sich dadurch, dass bevorzugt im Druckmaschinenbau der Rotationszylinder bzw. dessen Aufbau für den formatvariablen Druck einsetzbar ist. Je nach Aufbau bzw. Anzahl der Zwischenschichten kann ein derartiger Rotationszylinder einen Beitrag zur erhöhten Flexibilität des Druckmaschinenzylinders bzw. der Druckmaschinen selbst leisten. Beispielsweise ist bei Druckaufträgen mit wechselnden Druckbildlängen ein schneller Formatwechsel mittels je eines Rotationszylinders realisierbar. Hierzu ist der Rotationszylinder als Druckmaschinenzylinder, beispielsweise mit einer einzigen Zwischenschicht, gegen einen zweiten Rotationszylinder mit zwei oder mehreren Zwischenschichten auswechselbar oder umgekehrt. Dadurch ist ein Rotationszylinder, z.B. mit einer einzigen Zwischenschicht, mit einem definierten ersten Durchmesser gegen einen zweiten Rotationszylinder, z.B. mit mehreren Zwischenschichten, mit gleichem ersten Durchmesser oder abweichenden, beispielsweise größerem, zweiten Durchmesser auswechselbar.

Weiterhin kann als vierter Vorteil aufgezeigt werden, dass die Hülse in axialer Richtung auf einen Rotationszylindergrundkörper der Verarbeitungsmaschine aufschiebbar bzw. von diesem abziehbar ausgeführt sein.
Bei der Ausbildung des Rotationszylinders mit einer ersten Schicht als Hülse kann diese erste Schicht als Expansionsschicht ausgeführt sein und aus wenigstens einem nicht-metallischen Material, beispielsweise einem Verbundwerkstoff, gebildet sein. In einer Ausbildung kann die erste Schicht aus mehreren konzentrisch angeordneten, untereinander fixierten Lagen aus nicht-metallischen Materialien ausgeführt sein. Bei einem mehrlagigen Schichtaufbau der ersten Schicht ist zumindest deren innere, den Hohlraum einschließende Lage als Expansionslage ausgeführt. Die mehreren konzentrisch angeordneten Lagen der ersten Schicht können kraftschlüssig untereinander verbunden sein.

Die zweite Schicht kann je nach vorgesehener Funktion eine Druckform, Druckplatte, Lackplatte, Flexodruckplatte etc., tragen oder ein Gummituch oder eine Gummibeschichtung sein oder tragen. Alternativ kann die zweite Schicht einen Kunststoff, beispielsweise Polyamid, tragen oder durch einen Kunststoff, wie Polyamid, gebildet sein.

Die Erfindung soll an einem Ausführungsbeispiel näher erläutert werden. Dabei zeigen schematisch:

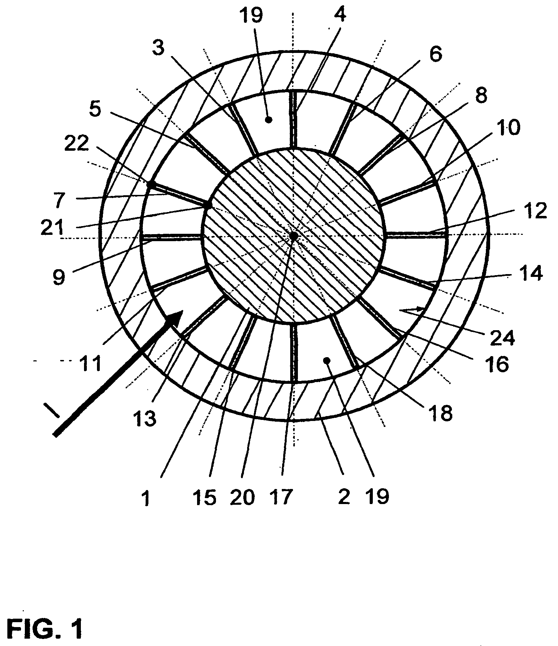

- Fig. 1 :: einen Querschnitt eines Rotationszylinder als Vollzylinder mit einer ersten Zwischenschicht, als nicht beanspruchtes Ausführungsbeispiel,
- Fig. 2 :: einen Querschnitt eines Rotationszylinders als Hülse mit einer ersten Zwischenschicht, als ein erfindungsgemäßes Ausführungsbeispiel,
- Fig. 3 :: eine Draufsicht auf eine Ausführung der ersten Zwischenschicht,
- Fig. 4 :: einen Querschnitt einer Hülse mit zwei Zwischenschichten, als weiteres erfindungsgemäßes Ausführungsbeispiel.

Ein erfindungsgemäßer Rotationszylinder für beispielsweise eine Druckmaschine umfasst eine erste Schicht 1 aus einem Hohlzylinder und eine zweite Schicht 2 sowie wenigstens eine zwischen den beiden Schichten 1, 2 formstabil angeordnete erste Zwischenschicht 1.

Bei Ausbildung der ersten Schicht 1 als Hohlzylinder, d.h. als Hülse, ist dieser Hohlzylinder aus einem nicht-metallischen Material. Dabei ist die erste Schicht 1 als eine Expansionsschicht 1 ausgebildet und schließt einen Hohlraum 55 ein.

Bei Montage der Hülse auf einen Druckmaschinenzylinder (Rotationszylindergrundkörper) nimmt der Druckmaschinenzylinder den Hohlraum 55 auf, indem die Hülse in axialer Richtung und mit Unterstützung eines Druckmediums auf den Druckmaschinenzylinder aufgeschoben bzw. von diesem abgezogen wird. Dieses Prinzip ist im Druckmaschinenbau auch als Sleeve-Technik bekannt. In einer Ausbildung kann die erste Schicht 1 aus einem Verbundwerkstoff gebildet sein.

Die wenigstens eine erste Zwischenschicht I umfasst mit Bezug zu einer Achse 20 des Rotationszylinders konzentrisch auf der ersten Schicht 1 fixiert angeordnete, radiale Stege 3 bis 18 und diesen Stegen 3 bis 18 benachbart zugeordnete Freiräume 19. Die Stege 3 bis 18 und Freiräume 19 erstrecken sich vollständig in Umfangs- und in Achsrichtung zur ersten Schicht 1.

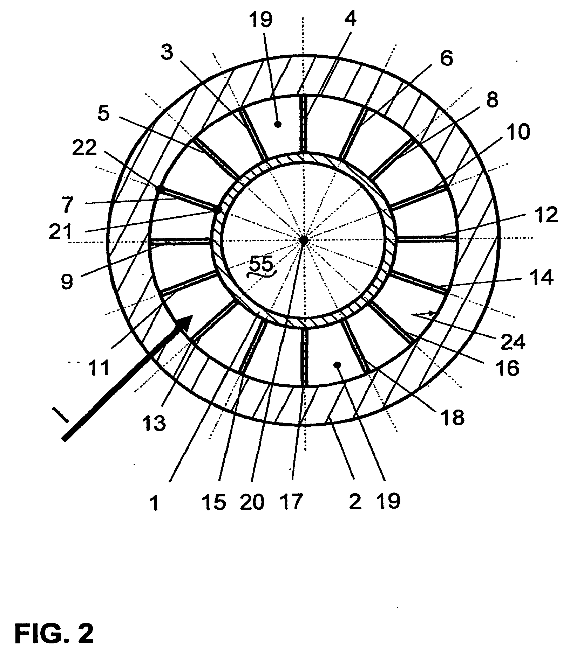

In einer ersten erfindungsgemäßen Ausbildung (Fig. 2) ist konzentrisch auf den Stegen 3 bis 18, die Freiräume 19 einschließend, die zweite Schicht 2 fixiert angeordnet. Die zweite Schicht 2 erstreckt sich vollständig in Umfangs- und in Achsrichtung zur ersten Schicht 1. In dieser Ausbildung sind die Freiräume 19 in radialer Richtung betrachtet durch die äußere Oberfläche (Umfangsfläche) der ersten Schicht 1 und die innere Oberfläche der zweiten Schicht 2 begrenzt.

In einer zweiten Ausbildung kann konzentrisch zwischen den Stegen 3 bis 18 und den Freiräumen 19 der ersten Zwischenschicht I und der zweiten Schicht 2 eine erste Schichtlage 24 fixiert angeordnet sein. Diese Schichtlage 24 erstreckt sich ebenso vollständig in Umfangs- und in Achsrichtung und begrenzt in Verbindung mit der ersten Schicht 1 die Stege 3 bis 18 sowie die Freiräume 19. Die erste Schichtlage 24 kann aus einem biegeschlaffen Material gebildet sein. Die erste Schichtlage 24 ist zumindest kraftschlüssig mit der zweiten Schicht 2 verbunden.

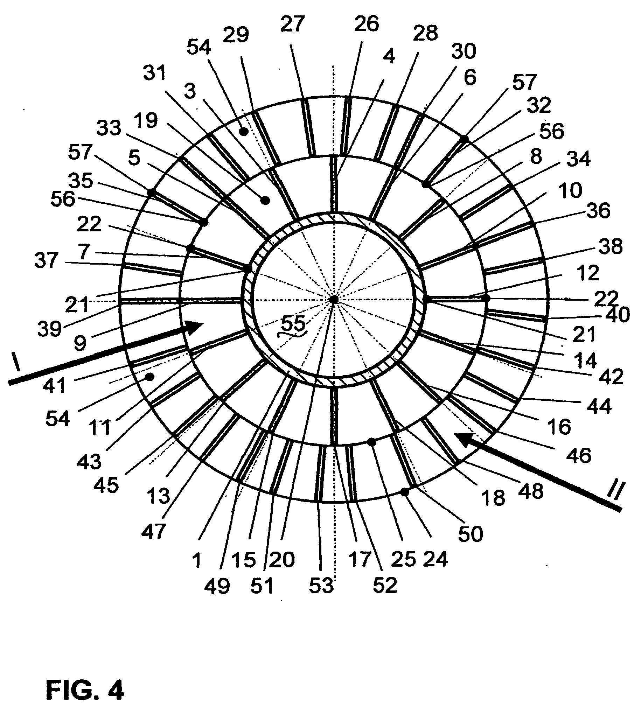

In einer dritten Ausbildung (Fig. 4) ist konzentrisch auf den Stegen 3 bis 18 und den Freiräumen 19 der ersten Zwischenschicht 1 eine zweite Schichtlage 25 fixiert angeordnet, welche ebenfalls aus einem biegeschlaffen Material gebildet sein kann. Diese Schichtlage 25 erstreckt sich ebenso vollständig in Umfangs- und in Achsrichtung. Weiterhin ist eine zweite Zwischenschicht 11 konzentrisch zur ersten Zwischenschicht I auf der zweiten Schichtlage 25 (Umfangsfläche) fixiert angeordnet und umfasst wiederum radiale Stege 26 bis 53 und den Stegen 26 bis 53 benachbart zugeordnete Freiräume 54. Auf den Stegen 26 bis 53 ist konzentrisch die Freiräume 54 einschließend die zweite Schicht 2 fixiert angeordnet (in Fig. 4 aus Gründen der Übersichtlichkeit nicht gezeigt).
In einer Weiterbildung kann zwischen den Stegen 26 bis 53 und Freiräumen 54 der zweiten Zwischenschicht II und der konzentrisch angeordneten zweiten Schicht 2 in Weiterbildung zu Fig. 2 die erste Schichtlage 24, beispielsweise aus einem biegeschlaffen Material, fixiert angeordnet sein. Die Schichtlage 24 ist zumindest kraftschlüssig mit der zweiten Schicht 2 verbunden.

Die Stege 3 bis 18 der ersten Zwischenschicht 1 und/oder die Stege 26 bis 53 der zweiten Zwischenschicht 11 sind formstabil und können aus einem leichten metallischen oder einem nicht-metallischen Material, insbesondere aus einem Kunststoffmaterial, ausgebildet sein.

Die Stege 3 bis 18 der ersten Zwischenschicht I sind endseitig in einem ersten Randbereich 21 mit der ersten Schicht 1 (Umfangsfläche) kraftschlüssig fixiert und endseitig in einem zweiten Randbereich 22 mit der zweiten Schicht 2 kraftschlüssig und/oder formschlüssig fixiert angeordnet. Alternativ können die Stege 3 bis 18 im zweiten Randbereich 22 endseitig mit der ersten Schichtlage 24 kraftschlüssig und/oder formschlüssig fixiert angeordnet sein (Fig. 2). Bei dieser Ausbildung ist die erste Schichtlage 24 wiederum zumindest kraftschlüssig mit der zweiten Schicht 2 fixiert angeordnet.

Bei Ausbildung eines Rotationszylinders mit mehrerer Zwischenschichten I, II 1 sind diese zwischen der ersten und zweiten Schicht 1, 2 angeordnet. Die Stege 3 bis 18 sind wiederum endseitig im ersten Randbereich 21 mit der ersten Schicht 1 kraftschlüssig fixiert und endseitig in dem zweiten Randbereich 22 mit der konzentrisch zwischen den Zwischenschichten I, II angeordneten zweiten Schichtlage 25 kraftschlüssig fixiert angeordnet.
Die Stege 26 bis 53 der Zwischenschicht II sind endseitig in einem ersten Randbereich 56 kraftschlüssig mit der zweiten Schichtlage 25 fixiert angeordnet und endseitig in einem zweiten Randbereich 57 kraftschlüssig und/oder formschlüssig mit der ersten Schichtlage 24 oder der zweiten Schicht 2 fixiert angeordnet.

Bei Anordnung zusätzlicher konzentrisch angeordneter Zwischenschichten ist zwischen den Stegen der jeweiligen Zwischenschicht wiederum eine weitere Schichtlage konzentrisch angeordnet und kraftschlüssig mit den Stegen fixiert. Die Schichtlagen 24, 25 können aus einem biegeschlaffen Material gebildet sein.

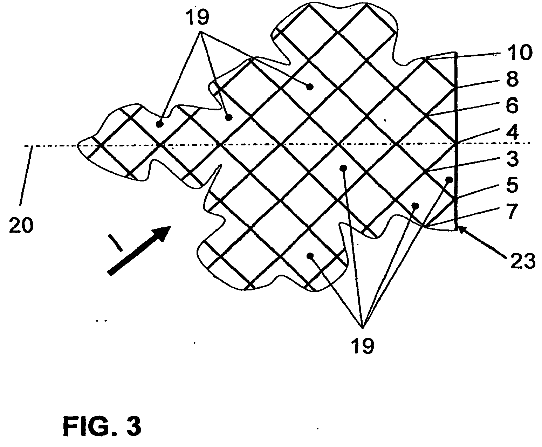

Fig. 3 zeigt einen Ausschnitt der ersten Zwischenschicht I in Draufsicht und zeigt an einer Stirnseite 23 die Stege 3 bis 8, 10 aus dem Querschnitt gemäß Fig. 2. Die radialen Stege 3 bis 18, bzw. die im Ausschnitt gezeigten Stege 3 bis 8, 10 als Teil der ersten Zwischenschicht I sind in einer zusammenhängenden Struktur auf der Umfangsfläche bzw. Mantelfläche der ersten Schicht 1 angeordnet. Dabei sind die Freiräume 19 durch die Stege 3 bis 18 geschlossen angeordnet.
Bei Betrachtung in radialer Richtung weisen die Freiräume 19 einen polygonförmigen Querschnitt auf. Im vorliegenden Beispiel ist ein quadratischer Querschnitt der Freiräume 19 gezeigt.

Bei Ausbildung eines Rotationszylinders mit erster und zweiter Zwischenschicht I, II kann die zweite Zwischenschicht II ebenso jeweils eine zusammenhängende Struktur der Stege 26 bis 53 und Freiräume 54 umfassen. Dabei können die radialen Stege 26 bis 53 der zweiten Zwischenschicht II in einer zusammenhängenden Struktur auf der Umfangsfläche der zweiten Schichtlage 25 angeordnet sein und die Freiräume 54 sind durch die Stege 26 bis 53 geschlossen angeordnet. Die Freiräume 54 weisen in radialer Richtung einen kreis- oder ellipsenförmigen oder einen polygonförmigen Querschnitt auf.

Jede Zwischenschicht I und/oder II weist einheitlich eine zusammenhängende Struktur der Stege 3 bis 18 und/oder 26 bis 53 auf. Beispielsweise kann die erste Zwischenschicht I durch eine zusammenhängende Struktur von Stegen 3 bis 18 mit Freiräumen 19 mit je einem polygonförmigen Querschnitt aufweisen. Die entsprechende zweite Zwischenschicht 11 kann eine zusammenhängende Struktur von Stegen 26 bis 53 mit Freiräumen 54 mit je einem kreisförmigen Querschnitt aufweisen.

In einer weiteren Ausbildung kann bei Anordnung lediglich einer ersten Zwischenschicht I zwischen den Schichten 1; 2 eine formschlüssige Verbindung zwischen den Stegen 3 bis 18 im jeweils zweiten Randbereich 22 und der zweiten Schicht 2 vorgesehen sein.

Bei Anordnung einer ersten Schichtlage 24 kann diese Schichtlage 24 ebenso formschlüssig mit den Stegen 3 bis 18 verbunden sein. Die Schichtlage 24 kann kraftschlüssig und/oder formschlüssig mit der zweiten Schicht 2 verbunden sein. Dabei kann je nach Anordnung die zweite Schicht 2 oder die erste Schichtlage 24, ggf. mit der zweiten Schicht 2, teilweise in die Freiräume 19 zwischen den Stegen 3 bis 18 eindringen.

Entsprechend ist bei Anordnung mindestens zweier Zwischenschichten I, II eine formschlüssige Verbindung zwischen den Stegen 26 bis 53 (Zwischenschicht II) und der zweiten Schicht 2 vorgesehen. Bei Anordnung einer ersten Schichtlage 24 kann diese Schichtlage 24 ebenso formschlüssig mit den Stegen 26 bis 53 verbunden sein. Die Schichtlage 24 kann kraftschlüssig und/oder formschlüssig mit der zweiten Schicht 2 verbunden sein. Dabei kann je nach Anordnung die zweite Schicht 2 oder die erste Schichtlage 24, ggf. mit der zweiten Schicht 2, teilweise in die Freiräume 54 zwischen den Stegen 26 bis 53 eindringen.
Die Anzahl der Stege 3 bis 18 und/oder 26 bis 53 sowie der sich ergebende wenigstens eine Freiraum 19 und/oder 54 ist lediglich beispielhaft aufgeführt und zahlenmäßig nicht begrenzt.

## Patentansprüche

1. Hülse zur Montage auf einen Druckmaschinenzylinder nach dem Prinzip der Sleeve-Technik , mit einer ersten Schicht (1) und einer zweiten Schicht (2) und wenigstens einer zwischen den beiden Schichten (1; 2) formstabil angeordneten Zwischenschicht (I), wobei
die erste Schicht (1) als Hohlzylinder ausgebildet ist,
die wenigstens eine erste Zwischenschicht (I) konzentrisch auf der ersten Schicht (1) fixiert angeordnete, radiale Stege (3 bis 18) umfasst,
die radialen Stege (3 bis 18) der ersten Zwischenschicht (I) in einer zusammenhängenden Struktur auf der Umfangsfläche der ersten Schicht (1) angeordnet sind, und
konzentrisch auf den Stegen (3 bis 18) die zweite Schicht (2) fixiert angeordnet ist;
**dadurch gekennzeichnet,**
**dass** die Zwischenschicht (I) nach dem Prinzip des konstruktiven Leichtbaus ausgebildet ist und den Stegen (3 bis 18) benachbart zugeordnete Freiräume (19) umfasst, wobei die zweite Schicht die Freiräume (19) einschließend angeordnet ist;
**dass** die Freiräume (19) durch die Stege (3 bis 18) geschlossen angeordnet sind und bei Betrachtung in radialer Richtung einen viereckigen und polygonförmigen Querschnitt aufweisen; und
**dass** sich Stege (3 bis 18) und Freiräume (19) vollständig in Umfangs- und Achsrichtung zur ersten Schicht (1) erstrecken.

2. Hülse nach Anspruch 1, **dadurch gekennzeichnet, dass** die Hülse eine Expansionsschicht (1) als erste Schicht (1) umfasst und die Expansionsschicht (1) aus einem nicht-metallischen Material gebildet ist.

3. Hülse nach Anspruch 1, **dadurch gekennzeichnet,**
**dass** konzentrisch zwischen den Stegen (3 bis 18) und Freiräumen (19) der ersten Zwischenschicht (I) und der zweiten Schicht (2) eine erste Schichtlage (24) fixiert angeordnet ist, welche zumindest kraftschlüssig mit der zweiten Schicht (2) verbunden ist.

4. Hülse nach Anspruch 1, **dadurch gekennzeichnet,**
**dass** konzentrisch auf den Stegen (3 bis 18) und Freiräumen (19) der ersten Zwischenschicht (I) eine zweite Schichtlage (25) fixiert angeordnet ist und dass eine zweite Zwischenschicht (II) konzentrisch auf der zweiten Schichtlage (25) fixiert angeordnete, radiale Stege (26 bis 53) und den Stegen (26 bis 53) benachbart zugeordnete Freiräume (54) umfasst, und dass konzentrisch auf den Stegen (26 bis 53) der zweiten Zwischenschicht (II), die Freiräume (54) der zweiten Zwischenschicht (II) einschließend die zweite Schicht (2) fixiert angeordnet ist.

5. Hülse nach Anspruch 4, **dadurch gekennzeichnet,**
**dass** die zweite Zwischenschicht (II) nach dem Prinzip des konstruktiven Leichtbaus ausgebildet ist.

6. Hülse nach Anspruch 4, **dadurch gekennzeichnet,**
**dass** zwischen den Stegen (26 bis 53) und Freiräumen (54) der zweiten Zwischenschicht (II) und der zweiten Schicht (2) konzentrisch eine erste Schichtlage (24) fixiert angeordnet ist, welche zumindest kraftschlüssig mit der zweiten Schicht (2) verbunden ist.

7. Hülse nach Anspruch 1, **dadurch gekennzeichnet,**
**dass** Stege (3 bis 18) der ersten Zwischenschicht (I) aus einem nicht¬metallischen Material sind.

8. Hülse nach Anspruch 4, **dadurch gekennzeichnet, dass** Stege (26 bis 53) der zweiten Zwischenschicht (II) aus einem nicht¬metallischen Material sind.

9. Hülse nach Anspruch 1, **dadurch gekennzeichnet,**
**dass** die erste Schicht (1) aus einem Verbundwerkstoff gebildet ist.

10. Hülse nach Anspruch 4, **dadurch gekennzeichnet,**
**dass** die radialen Stege (26 bis 53) der zweiten Zwischenschicht (II) in einer zusammenhängenden Struktur auf der Umfangsfläche der zweiten Schichtlage (25) angeordnet sind und die Freiräume (54) der zweiten Zwischenschicht (II) durch die Stege (26 bis 53) der zweiten Zwischenschicht (II) geschlossen angeordnet sind.

11. Hülse nach Anspruch 10, **dadurch gekennzeichnet,**
**dass** die Freiräume (54) der zweiten Zwischenschicht (II) in radialer Richtung einen polygonförmigen Querschnitt aufweisen.

12. Hülse nach einem der Ansprüche 1 bis 11, **dadurch gekennzeichnet,**
**dass** die Freiräume (19) der ersten Zwischenschicht (I) bei Betrachtung in radialer Richtung einen quadratischen Querschnitt aufweisen.

13. Verwendung einer Hülse nach einem der Ansprüche 1 bis 12 für den formatvariablen Druck.

14. Anordnung für den formatvariablen Druck umfassend eine erste Hülse und eine zweite Hülse, welche auf einem Druckmaschinenzylinder nach dem Prinzip der Sleeve-Technik auswechselbar sind, wobei die zweite Hülse einen größeren Durchmesser aufweist als die erste Hülse, **dadurch gekennzeichnet, dass** die erste Hülse und die zweite Hülse jeweils nach einem der Ansprüche 1 bis 12 ausgeführt sind.

## Claims

1. A sleeve for mounting on a printing machine cylinder according to the principle of sleeve technology, with a first layer (1) and a second layer (2) and at least one first intermediate layer (I) arranged in stable manner as to its form between the two layers (1; 2), in which
the first layer (1) is designed as a hollow cylinder,
the at least one first intermediate layer (I) has radial webs (3 to 18) arranged in fixed manner concentrically on the first layer (1),
the radial webs (3 to 18) of the first intermediate layer (I) are arranged according to a continuous pattern on the circumferential surface of the first layer (1), and
the second layer (2) is arranged in fixed manner and concentrically on the webs (3 to 18);
**characterized**
**in that** the intermediate layer (I) is built according to the principle of lightweight construction and comprises, adjacent to the webs (3 to 18), associated free spaces (19), wherein the second layer is arranged to close the free spaces (19);
**in that** the free spaces (19) are arranged closed by the webs (3 to 18) and, when viewed in the radial direction, have a quadrilateral and polygonal cross-section; and
**in that** the webs (3 to 18) and the free spaces (19) extend completely in the circumferential and axial direction with respect to the first layer (1).

2. Sleeve according to claim 1, **characterized in that** the sleeve has an expansion layer (1) as a first layer (1) and said expansion layer (1) is formed of a non-metallic material.

3. Sleeve according to claim 1, **characterized in that**, concentrically between the second layer (2) and the webs (3 to 18) and the free spaces (19) of the first intermediate layer (I), a first layer level (24) is arranged in fixed manner and connected with the second layer (2) at least by force-fit.

4. Sleeve according to claim 1, **characterized**
**in that**, concentrically on the webs (3 to 18) and the free spaces (19) of the first intermediate layer (I), a second layer level (25) is arranged in fixed manner and
**in that** a second intermediate layer (II) is arranged in fixed manner concentrically on the second layer level (25) and comprises radial webs (26 to 53) and adjacent to the webs (26 to 53) associated free spaces (54), and
**in that**, concentrically on the webs (26 to 53) of the second intermediate layer (II), the second layer (2) is arranged in fixed manner and closing the free spaces (54) of the second intermediate layer (II).

5. Sleeve according to claim 4, **characterized in that**
that the second intermediate layer (II) is built according to the principle of lightweight construction.

6. Sleeve according to claim 4, **characterized in that**, concentrically between the second layer (2) and the webs (26 to 53) and the free spaces (54) of the second intermediate layer (II), a first layer level (24) is arranged and in fixed manner and connected with the second layer (2) at least by force-fit.

7. Sleeve according to claim 1, **characterized in that**
that the webs (3 to 18) of the first intermediate layer (I) are made of a non-metallic material.

8. Sleeve according to claim 4, **characterized in that** the webs (26 to 53) of the second intermediate layer (II) are made of a non-metallic material.

9. Sleeve according to claim 1, **characterized in that**
that the first layer (1) is formed from a composite material.

10. Sleeve according to claim 4, **characterized in that**
the radial webs (26 to 53) of the second intermediate layer (II) are arranged according to a continuous pattern on the circumferential surface of the second layer level (25) and the free spaces (54) of the second intermediate layer (II) are closed by the webs (26 to 53) the second intermediate layer (II).

11. Sleeve according to claim 10, **characterized in that**
the free spaces (54) of the second intermediate layer (II) have a polygonal cross-section when viewed in the radial direction.

12. Sleeve according to any one of claims 1 to 11, **characterized in that** the free spaces (19) of the first intermediate layer (I) have a square cross-section when viewed in the radial direction.

13. Use of a sleeve according to one of claims 1 to 12 for the flexographic printing.

14. An arrangement for flexographic printing comprising a first sleeve and a second sleeve which are exchangeable on a printing machine cylinder according to the principle of sleeve technology, the second sleeve having a larger diameter than the first sleeve, **characterized in that** the first sleeve and the second sleeve are each designed according to one of claims 1 to 12.

## Revendications

1. Manchon pour le montage sur un cylindre de machine d'impression selon le principe de la technologie à manchon, avec une première couche (1) et une deuxième couche (2) et au moins une première couche intermédiaire (I) à forme stable disposée entre les deux couches (1, 2), dans lequel la première couche (1) est réalisée sous forme d'un cylindre creux,
l'au moins une première couche intermédiaire (I) disposée de manière fixe et de manière concentrique sur la première couche (1) comprend des entretoises radiales (3 à 18),
les entretoises radiales (3 à 18) de la première couche intermédiaire (I) sont disposées suivant une structure ininterrompue sur la surface circonférentielle de la première couche (1), et
la deuxième couche (2) est disposée de manière fixe et de façon concentrique sur les entretoises (3 à 18);
**caractérisé en ce**
**que** la couche intermédiaire (I) est formée selon un principe de construction légère et comprend des espaces libres (19) adjacents et associés aux entretoises (3 à 18), la deuxième couche (2) étant disposée à fermer les espaces libres (19);
**que** les espaces libres (19) sont disposés fermés par les entretoises (3 à 18) et, vus dans la direction radiale, présentent une section en quadrilatère et polygonale; et en ce
**que** les entretoises (3 à 18) et les espaces libres (19) s'étendent complètement dans la direction circonférentielle et axiale par rapport à la première couche (1).

2. Manchon selon la revendication 1, **caractérisé en ce que** le manchon comporte une couche d'expansion (1) en tant que première couche (1) et ladite couche d'expansion (1) est formée d'un matériau non métallique.

3. Manchon selon la revendication 1, **caractérisé en ce que**,
de manière concentrique entre la deuxième couche (2) et les entretoises (3 à 18) et les espaces libres (19) de la première couche intermédiaire (I), une première épaisseur de couche (24) est disposée de manière fixe et reliée à la deuxième couche (2) au moins par friction.

4. Manchon selon la revendication 1, **caractérisé en ce que**
de manière concentrique sur les entretoises (3 à 18) et les espaces libres (19) de la première couche intermédiaire (I), une deuxième épaisseur de couche (25) est disposée de manière fixe, **en ce que**
une deuxième couche intermédiaire (II), disposée de manière fixe et concentrique sur la deuxième épaisseur de couche (25), comprend des entretoises radiales (26 à 53) et des espaces libres (54) adjacents et associés aux entretoises radiales (26 à 53), et **en ce que**
de manière concentrique sur les entretoises (26 à 53) de la deuxième couche intermédiaire (II), la deuxième couche (2) est disposée de manière fixe et de manière à fermer les espaces libres (54) de la deuxième couche intermédiaire (II).

5. Manchon selon la revendication 4, **caractérisé en ce que** la deuxième couche intermédiaire (II) est formée selon un principe de construction légère.

6. Manchon selon la revendication 4, **caractérisé en ce que**
de manière concentrique entre la deuxième couche (2) et les entretoises (26 à 53) et les espaces libres (54) de la deuxième couche intermédiaire (II), une première épaisseur de couche (24) est disposée de manière fixe, qui est reliée à la deuxième couche (2) au moins par friction.

7. Manchon selon la revendication 1, caractérisé en ce les entretoises (3 à 18) de la première couche intermédiaire (I) sont formées d'un matériau non métallique.

8. Manchon selon la revendication 4, **caractérisé en ce que** les entretoises (26 à 53) de la deuxième couche intermédiaire (II) sont formées d'un matériau non métallique.

9. Manchon selon la revendication 1, **caractérisé en ce que** la première couche (1) est formée à partir d'un matériau composite.

10. Manchon selon la revendication 4, **caractérisé en ce que** les entretoises radiales (26 à 53) de la deuxième couche intermédiaire (II) sont disposées suivant une structure ininterrompue sur la surface circonférentielle de la deuxième épaisseur de couche (25) et **en ce que**
les espaces libres (54) de la deuxième couche intermédiaire (II) sont disposées fermés par les entretoises (26 à 53) de la deuxième couche intermédiaire (II).

11. Manchon selon la revendication 10, **caractérisé en ce que**
les espaces libres (54) de la deuxième couche intermédiaire (II) présentent une section polygonale vue dans la direction radiale.

12. Manchon selon l'une quelconque des revendications 1 à 11, **caractérisé en ce que**
les espaces libres (19) de la première couche intermédiaire (I) présentent une section carrée vue dans la direction radiale.

13. Utilisation d'un manchon selon l'une quelconque des revendications 1 à 12 pour l'impression à format variable.

14. Dispositif pour l'impression à format variable, comprenant un premier manchon et un deuxième manchon qui sont échangeables sur un cylindre de machine d'impression selon le principe de la technologie à manchon, le deuxième manchon ayant un diamètre plus grand que le premier manchon, **caractérisé en ce que** le premier manchon et le second manchon sont chacun conçus selon l'une quelconque des revendications 1 à 12.
